# EUROPEAN PATENT SPECIFICATION

(11) **EP 0 428 263 B1**
(45) Date of publication and mention of the grant of the patent: **16.02.1994**
(21) Application number: 90310966.8
(22) Date of filing: 05.10.1990
(51) Int. Cl.: G01D 5/26, G01L 1/10

(54) **Vibrating sensor**
Schwingender Sensor
Capteur vibrant

(30) Priority: 17.10.1989 GB 8923374
(43) Date of publication of application: 22.05.1991
(73) Proprietor: LUCAS INDUSTRIES PUBLIC LIMITED COMPANY, Solihull, West Midlands B91 3TX (GB)
(72) Inventor: Cook, Alan James, Moseley, Birmingham B13 9SS (GB); Hawker, Stephen David, Sutton Coldfield, West Midlands B73 6PY (GB)
(74) Representative: Mosey, Stephen George

(56) References cited:
- EP-A- 0 090 167
- GB-A- 2 146 120

## Description

This invention relates to a sensor, and in particular an optically driven microresonant sensor.

U.K. Patent specification 2185106A discloses an element having a resonant frequency dependent upon the nature of an applied force, a light source arranged to direct light onto said element to cause said element to vibrate, with a proportion of said light being reflected by said element, and means for determining the resonant frequency. The sensor element is a thin beam of rigid material which is arranged to vibrate relative to its mounting assembly as a result of a light beam being incident normally on its outer surface. The beam outer surface has an optically reflective layer which intercepts approximately half the area of the incident light beam, which is focused by a lens into a focused spot, which is itself incident on the beam outer surface at a position displaced from the neutral beam axis. The remainder of the beam surface illuminated by the spot is covered by a layer of an optically absorbing material which absorbs the greater part of the light incident upon it.

In use, the absorbing material is heated by the focused spot, causing thermal conduction to the beam material underneath. This localised thermal expansion of the beam causes a bending movement in the beam which results in a smaller area of absorbing material being exposed to the spot, so that the heating becomes less. The beam thus cools and returns to its original position, where the cycle begins again. The beam vibration can become self-sustaining. By measuring the reflective light from the beam during oscillation, the oscillation frequency can be evaluated. The sensor can be used as a force, pressure or temperature sensor by arranging for changes in the selected parameter to change oscillation frequency.

One disadvantage of the described sensor of this prior art specification is its direction of vibration, which is not about the easiest axis of movement, and is thus inefficient for the coupling of energy into that mode of oscillation. This is a result of both the beam mask design and the angle of incidence of the light beam, which is normal to the flat surface of the beam. The use of micromachined silicon or quartz to gain the benefits of mass fabrication and material interfacing, creates a fundamental problem in achieving the direction of movement required for detection of oscillation of the structure.

Patent specification GB-A-2146120 discloses a sensor element having a vibratory part which is excited into oscillation by a first pulsed light source which directs light normal to the vibratory part. A second, non-exciting light source directs continuous light, at an angle to said normal direction, onto the excited vibratory part, and the continuous light, modulated by its reflection at the vibratory part, is detected to provide an indication of the value of force applied to the sensor.

In patent specification EP-A-0090167 there is disclosed a sensor element in the form of a vibratory wire which is excited into vibration by a pulsed light source producing electric current in the wire which itself is in a magnetic field. Continuous, non-exciting light is directed normally onto the wire for the reflection therefrom of a modulated light signal, which is detected to provide an indication of a process condition.

Applicants' co-pending European Patent Application No. 0381309A discloses an oscillating beam sensor element of similar form to the sensor element of the present invention. However in the co-pending application the drive light source of the sensor has to be pulsed, and is applied normal to the beam. Control electronics are required to track the drive light source with a resonant frequency. Thus both the drive and sensing arrangements are quite different from those of the sensor of the present invention

An object of the invention is to provide a sensor in which the above mentioned disadvantages of the prior art are overcome.

According to the present invention there is provided a sensor comprising an element having a resonant frequency dependent upon the nature of an applied force, a light source arranged to direct light onto said element to cause said element to vibrate, with a proportion of said light being reflected by said element, and means for determining the resultant resonant frequency, characterised in that said element, in a non-vibratory state, has a flat surface with at least three parallel normals to said flat surface, said normals lying in at least two different planes, and in that said light is arranged to be directed onto said flat surface of said element at a non-zero angle of incidence relative to said normals to said flat surface, so that the amount of light reflected by the element is dependent on its vibrational displacement at a resonant frequency.

As used herein, 'light' includes the range of electromagnetic radiation from ultra-violet to infra-red inclusive.

The invention will now be described, by way of invention, with reference to the accompanying drawings, in which:
Figure 1 is a schematic, diagrammatic view of a sensor of the invention, showing a light source directed onto an element,
Figure 2 is a view like Figure 1, showing the reflection of light by the element in two alternative positions,
Figure 3 shows how for movement of the element between its alternative positions of Figure 2, there is a relative lateral displacement between the incident light and the element,
Figure 4 is a graph showing power of the reflected light against vertical displacement of said element for two different light source angles of incidence, and
Figure 5 shows an alternative embodiment of the invention employing an optical fibre to supply the incident light and receive the reflected light, with means for determining the resonant frequency of the sensor from incident and reflected light readings respectively.

A sensor of the invention has a vibratory element forming part of a sensor member, and this element has a resonance frequency which is dependent upon the nature of a force applied to said member. Typically the force applied could be a stress force applied generally longitudinally of said vibratory element. However, the sensor member could be adapted, for example, to be a pressure sensor or a temperature sensor, where the resonance frequency depends upon the pressure or temperature applied to the sensor member.

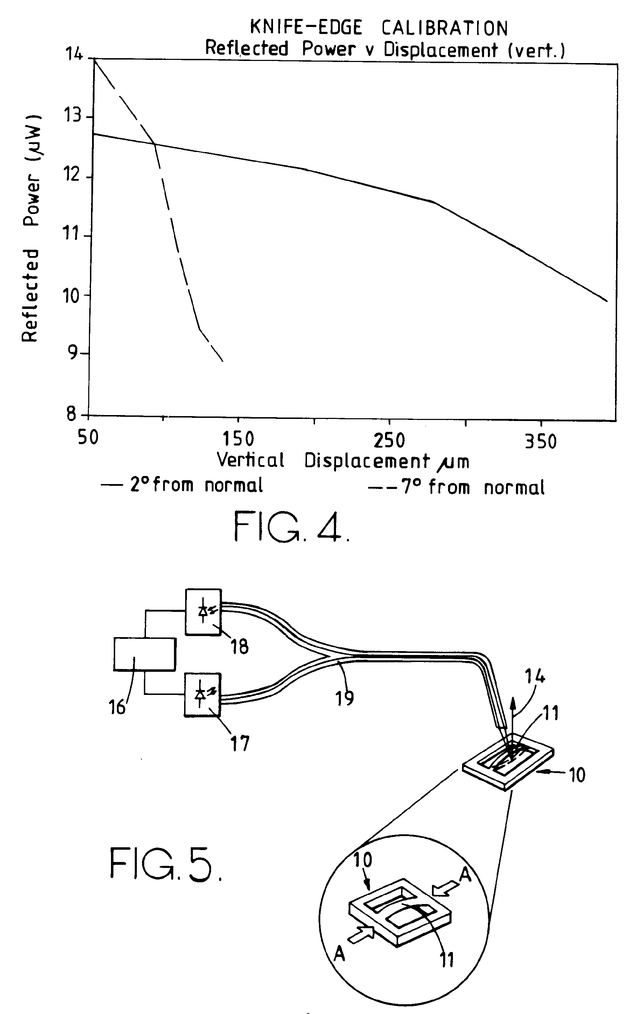

Figure 5 includes an enlarged scrap view showing a typical sensor member 10 of a sensor of the invention. The member 10 has a generally square or rectangular frame between two opposed sides of which extends a vibratory element in the form of a bridge, beam or knife-edge 11. This bridge 11 can be made to vibrate by directing a beam of light onto it. The whole of the upper surface of the bridge is coated with a light absorbing material for enhancing the conversion of light energy to heat at said upper surface. The differential thermal expansion between the top and bottom surface of the bridge induces a bending movement causing the bridge to flex. Subsequent cooling followed by further heating causes the bridge to vibrate. Vibration occurs in a direction normal to the plane of said frame, i.e., in the direction of least mechanical resistance for the bridge 11. The resonant frequency of the bridge will vary in accordance with the stress applied to the sensor member, as indicated by the arrows A. Thus by measuring the resonance frequency in suitably controlled systems, very accurate measurements can be made.

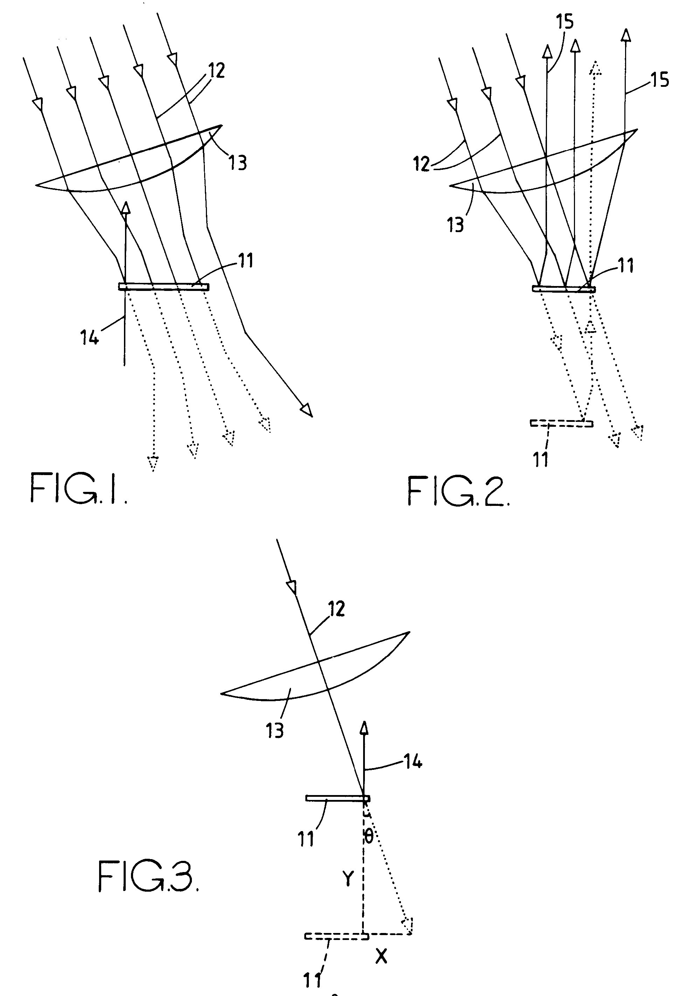

The theory of the sensor of the invention will be explained with reference to Figures 1 to 3.

Figure 1 shows a continuous beam of incident light 12, for example from a He-Ne laser. The beam is focused down by a lens 13 to provide a Gaussian beam waist region, where the sensor 10 is disposed, only the bridge 11 being shown in Figure 1 for clarity. It is important to note that the beam is incident at a non-zero angle relative to a normal 14 to the bridge 11. In Figure 1, the reflected path of light rays is also omitted for clarity. In this 'rest' or first position of the bridge, the whole, or most, of the light beam is intercepted by the bridge and reflected back through the lens, as shown in Figure 2, where the whole incident beam profile is not shown for the sake of clarity. The reflected rays are denoted by numeral 15. These reflected rays are received by a light intensity measuring system (not shown).

As the bridge 11 absorbs energy from the incident light beam, it moves from the position shown in full in Figure 2 to the position shown in dashed lines, this vibratory movement being in the direction of the normal 14. As a result of the inclination of the light beam to the normal, the proportion of the light beam intercepted by the bridge in its second position will decrease, as shown in Figure 2. This reduced amount of light reflected by the bridge 11 passes through the lens 13 and is received by the light intensity measuring system. The system will thus register a decreased light intensity with displacement of the bridge from its first to its second position, and the resonant frequency and amplitude of oscillation of the bridge can be determined from these readings as the bridge freely vibrates between said two positions, producing a sinusoidal oscillation.

Figure 3 illustrates how, in effect, the vertical vibratory movement Y of the bridge introduces a horizontal component of movement X between the bridge and the optical beam with X = Y tan ϑ, where ϑ is the angle of incidence of the light source. In use, the sensor effectively operates partly ON or OFF, with part of the light beam wholly reflected or part of the light beam wholly missed by the sensor bridge.

Instead of the amount of reflected light decreasing as the bridge moves to its second position, the light intensity measuring system could be arranged to receive more light with the bridge in position 2 than position 1.

Figure 4 shows graphically how the amount, and thus the power, of the reflected light varies as the bridge moves from its 'rest' or first position. As can be seen for an angle of incidence for the light beam of 2° from the normal, there is a relatively slow, but steady reduction in the reflected power as the bridge moves away. With an angle of incidence increased to 7°, the fall off is much more pronounced even before the movement has reached 150µm, demonstrating the partly ON - OFF nature of the sensor referred to above, and thus its sensitivity. It is believed that the minimum workable angle is 2°. The maximum is likely to be of the order of 25°. Preferably the workable range is 10 to 15 degrees.

Figure 5 shows an alternative form of the invention, where a light intensity measuring system 16 is connected to a continuous light source 17, such as a light-emitting diode or a laser diode, and a reflected light receiving diode 18 or the like. The light is coupled to and from the sensor member by means of an optical fibre 19 with a Y coupler at its one end. The Figure shows the direction of vibration of the bridge 11 along the normal 14, as described hereinbefore with reference to Figures 2 and 3.

The structure illustrated in Figure 5 is relatively small. For instance, the bridge 11 may be of the order of 200 micrometers long, 10 micrometers wide, and 2 micrometers thick. The bridge is thus compatible with single-mode and multi-mode optical fibres, such as the fibre 19.

By means of a fusion splicer, the end of the optical fibre adjacent the bridge has been lensed to provide some degree of focus for the emitted light therefrom, this issuing as a cone.

An application of the invention is the measurement of small displacements associated with microresonator structures. The microresonant element may also be envisaged to self-oscillate using a light source arranged as described herein.

Compared to the prior art arrangement referred to, it is believed that a sensor of the invention has various advantages. Firstly a dual layer structure, i.e. absorptive/reflective, is not used, making the sensor member 10 both simpler and less expensive. Secondly the incident light beam impinges on the bridge at non-normal incidence, so that the detected signal changes as the bridge moves vertically and out of the path of the beam, the movement occurring, when excited, in its direction of least mechanical resistance, i.e. in a plane perpendicular to its thinnest cross-section.

Thirdly, the sensor operates so that the optical beam is either mostly intercepted or not by the bridge 11. The modulation depth will therefore be greater than a comparable sensor system relying on the difference in signals from a reflective region and an absorptive region. This is because an absorber has some reflection and a reflector some absorption. The efficiency and ease of excitation in terms of detected signal amplitude is thus higher with the sensor of the invention.

The system of the present invention employs a fundamentally different technique from that of the prior art referred to, in that the prior art relates to an absorb/reflect system whereas the invention uses the partial reflect/intersection of a light beam. The invention can be said to be one in which the beam has non-normal incidence and uses diffuse reflection components from the resonator surface. Also the multi-mode optical fibre provides a light source with optical beams comprising a range of incident angles.

Although not critical, the lens should be close to the sensor member, for example within 50 - 100 µm. Although a laser can be used to provide the light source, a ordinary source of light can be used, although here it would not be possible for the lens to produce a perfect spot of incident light on the bridge 11.

The invention is seen to be of particular use where highly accurate pressure sensors or accelerometers are required in an environment with temperatures in excess of 200°C. This optical type of sensor is not subject to changes in electrical characteristics which may result from high temperature environments.

## Claims

1. A sensor comprising an element (11) having a resonant frequency dependent upon the nature of an applied force, a light source (12) arranged to direct light onto said element to cause said element to vibrate, with a proportion of said light being reflected by said element, and means (16) for determining the resultant resonant frequency, characterised in that said element (11), in a non-vibratory state, has a flat surface with at least three parallel normals to said flat surface, said normals lying in at least two different planes, and in that said light is arranged to be directed onto said flat surface of said element at a non-zero angle of incidence relative to said normals to said flat surface, so that the amount of light reflected by the element (11) is dependent on its vibrational displacement at a resonant frequency.

2. A sensor according to Claim 1, wherein the light source (12) causes said element (11) to vibrate at a resonance frequency due to a photothermal effect in which the element alternately expands and contracts resulting from a variation in the amount of light received onto said element during said vibration.

3. A sensor according to Claim 2, wherein the light source (12) is arranged to direct light onto said flat surface of said element, which flat surface is all of the same material.

4. A sensor according to Claim 3, wherein said surface is of light absorbing material.

5. A sensor according to any one of Claims 2 to 4, wherein the element (11) is a bridge suspended at its ends and arranged to vibrate in the direction of its least mechanical resistance.

6. A sensor according to Claim 5, comprising a light intensity measuring system (16) which has a maximum amount of light coupled back to it when the element (11) is in its closest position towards the light source.

7. A sensor according to Claim 6, wherein the light source is coupled to the element (11) by lens means.

8. A sensor according to Claim 6, wherein the light intensity measuring system (16) is connected to the light source (17) and to reflected light receiving means (18), an optical fibre having a Y coupler at one of its ends, the branches of which are connected to the light source and the receiving means respectively.

9. A sensor according to any one of the preceding claims, wherein the angle of incidence of the light is at least 2°.

10. A sensor according to any one of the preceding claims, wherein the light source is continuous.

11. A method of operating a sensor, comprising directing light from a light source (12) onto an element (11) having a resonant frequency dependent upon the nature of an applied force to cause the element to vibrate, with a proportion of said light being reflected by said element, and providing means (16) for determining the resultant resonant frequency, characterised in that said element, in a non-vibratory state, has a flat surface with at least three parallel normals to said flat surface, said normals lying in at least two different planes, and in that said light is directed onto said flat surface of said element at a non-zero angle of incidence relative to said normals to said flat surface, so that the amount of light reflected by the element (11) is dependent on its vibrational displacement at a resonant frequency.

12. A method according to Claim 11, wherein the light source (12) causes said element (11) to vibrate at a resonance frequency due to a photothermal effect in which the element alternately expands and contracts resulting from a variation in the amount of light received onto said element during said vibration.

13. A method according to Claim 11 or Claim 12, wherein the element (11) is a bridge suspended at its ends and vibrates in the direction of its least mechanical resistance.

14. A method according to any one of Claims 11 to 13, wherein the light is focused onto the element.

15. A method according to any one of the preceding claims, wherein the light is directed onto the element (11) at an angle of incidence of at least 2°.

16. A method according to any one of the preceding claims, wherein the light source is continuous.

## Patentansprüche

1. Ein Sensor mit einem Element (11) mit einer von der Art einer darauf einwirkenden Kraft abhängigen Resonanzfrequenz, einer Lichtquelle (12), die so angebracht ist, daß sie Licht auf das Element richtet, um dieses in Schwingungen zu versetzen, wobei ein Teil des Lichts von dem Element reflektiert wird, und einer Vorrichtung (16) zur Bestimmung der resultierenden Resollanzfrequenz, dadurch gekennzeichnet, daß das Element (11) in nicht schwingendem Zustand über eine flache Oberfläche mit mindestens drei parallelen Normalen verfügt, die in mindestens zwei verschiedenen Ebenen liegen, und daß das Licht so beschaffen ist, daß es in einem Einfallwinkel, der in bezug auf die Normale der flachen Oberfläche nicht Null ist, auf die flache Oberfläche des Elements gerichtet ist, so daß die Menge des von dem Element (11) reflektierten Lichts von seiner Schwingungsverschiebung bei einer Resonanzfrequenz abhängt.

2. Ein Sensor nach Anspruch 1, bei dem die Lichtquelle (12) das Element (11) durch einen photothermischen Effekt, durch den sich das Element aufgrund einer während der Schwingung auftretenden Änderung der auf ihm auftreffenden Lichtmenge abwechselnd ausdehnt und zusammenzieht, in Schwingungen mit einer Resonanzfrequenz versetzt.

3. Ein Sensor nach Anspruch 2, bei dem die Lichtquelle (12) so beschaffen ist, daß sie Licht auf die flache Oberfläche des Elements richtet, wobei die gesamte flache Oberfläche aus demselben Material besteht.

4. Ein Sensor nach Anspruch 3, bei dem diese Oberfläche aus llchtabsorbierendem Material besteht.

5. Ein Sensor nach einem der Ansprüche 2 bis 4, bei dem das Element (11) eine an ihren Enden aufgehängte Brücke ist, die so beschaffen ist, daß sie in der Richtung ihres geringsten mechanischen Widerstands schwingt.

6. Ein Sensor nach Anspruch 5 mit einem Lichtintensitäts-Meßsystem (16), an das eine maximale Lichtmenge zurückgeleitet wird, wenn sich das Element (11) in seiner der Lichtquelle zunächst gelegenen Position befindet.

7. Ein Sensor nach Anspruch 6, bei dem die Lichtquelle mittels einer Linse an das Element (11) gekoppelt ist.

8. Ein Sensor nach Anspruch 6, bei dem das Lichtintensitäts-Meßsystem (16) mit der Lichtquelle (17) und einer Vorrichtung (18) zur Erfassung des reflektierten Lichts verbunden ist, wobei eine Lichtleitfaser an einem ihrer Enden einen Y-Koppler aufweist, dessen Zweige mit der Lichtquelle bzw. der Vorrichtung zur Erfassung des reflektierten Lichts verbunden sind.

9. Ein Sensor nach einem der obigen Ansprüche, bei dem der Einfallwinkel des Lichts mindestens 2° beträgt.

10. Ein Sensor nach einem der obigen Ansprüche bei dem die Lichtquelle kontinuierlich ist.

11. Ein Verfahren zur Betätigung eines Sensors, das das Richten von Licht von einer Lichtquelle (12) auf ein Element (11) mit einer von der Art der zur Erregung einer Schwingung des Elements auf dieses einwirkenden Kraft abhängigen Resonanzfrequenz, wobei ein Teil des Lichts von dem Element reflektiert wird, sowie die Bereitstellung einer Vorrichtung (16) zur Bestimmung der resultierenden Resonanzfrequenz umfaßt, dadurch gekennzeichnet, daß das Element in nicht schwingendem Zustand über eine flache Oberfläche mit mindestens drei parallelen Normalen verfügt, die in mindestens zwei verschiedenen Ebenen liegen, und daß das Licht in einem Einfallwinkel, der in bezug auf ihre Normale nicht Null ist, auf diese flache Oberfläche des Elements gerichtet wird, so daß die von dem Element (11) reflektierte Lichtmenge von seiner Schwingungsverchiebung bei einer Resonanzfrequenz abhängt.

12. Ein Verfahren nach Anspruch 11, bei dem die Lichtquelle (12) das Element (11) mittels eines photothermischen Effekts, durch den es sich aufgrund einer Änderung der während der Schwingung auf es auftreffenden Lichtmenge abwechselnd ausdehnt und zusammenzieht, in Schwingungen mit einer Resonanzfrequenz versetzt.

13. Ein Verfahren nach Anspruch 11 oder 12, bei dem das Element (11) eine an ihren Enden aufgehängte Brücke ist, die in der Richtung ihres geringsten mechanischen Widerstands schwingt.

14. Ein Verfahren nach einem der Ansprüche 11 bis 13, bei dem das Licht auf das Element fokussiert wird.

15. Ein Verfahren nach einem der obigen Ansprüche, bei dem das Licht mit einem Einfallwinkel von mindestens 2° auf das Element gerichtet ist.

16. Ein Verfahren nach einem der obigen Ansprüche, bei dem die Lichtquelle kontinuierlich ist.

## Revendications

1. Un capteur comprenant un élément (11) avec une fréquence de résonance dépendant de la nature d'une force appliquée, une source lumineuse (12), agencée de sorte à diriger la lumière sur ledit élément pour entraîner la vibration du dit élément, une partie de ladite lumière étant réfléchie par ledit élément, ainsi qu'un moyen (16) pour déterminer la fréquence de résonance résultante, caractérisé en ce que ledit élément (11), dans un état non vibratoire, possède une surface plate avec au moins trois verticales sur ladite surface plate parallèles, lesdites verticales se situant dans au moins deux plans différents, et en ce que ladite lumière est agencée de sorte à être dirigée sur ladite surface plate du dit élément à un angle d'incidence non égal à zéro par rapport aux dites verticales sur ladite surface plate, de sorte que la quantité de lumière réfléchie par l'élément (11) dépend de son déplacement vibratoire à une fréquence de résonance.

2. Un capteur selon la revendication 1, dans lequel la source lumineuse (12) entraîne la vibration du dit élément (11) à une fréquence de résonance par suite d'un effet photothermique dans lequel l'élément se dilate et se contracte alternativement en fonction d'une variation de la quantité de lumière reçue par ledit élément au cours de ladite vibration.

3. Un capteur selon la revendication 2, dans lequel la source lumineuse (12) est agencée de sorte à diriger la lumière sur ladite surface plate du dit élément, cette surface plate étant entièrement composée du même matériau.

4. Un capteur selon la revendication 3, dans lequel ladite surface est composée d'un matériau absorbant la lumière.

5. Un capteur selon l'une quelconque des revendications 2 à 4, dans lequel l'élément (11) est un pont suspendu au niveau de ses extrémités et agencé de sorte à vibrer dans la direction de sa résistance mécanique minimale.

6. Un capteur selon la revendication 5, comprenant un système de mesure de l'intensité lumineuse (16), sur lequel est réappliquée une quantité maximale de lumière lorsque l'élément (11) se trouve dans sa position la plus proche de la source lumineuse.

7. Un capteur selon la revendication 6, dans lequel la source lumineuse est couplée à l'élément (11) par un moyen de lentille.

8. Un capteur selon la revendication 6, dans lequel le système de mesure de l'intensité lumineuse (16) est connecté à la source lumineuse (17) et à un moyen de réception de la lumière réfléchie (18), une fibre optique ayant un coupleur en Y au niveau de l'une de ses extrémités, dont les raccords sont respectivement connectés à la source lumineuse et au moyen de réception.

9. Un capteur selon l'une quelconque des revendications précédentes, dans lequel l'angle d'incidence de la lumière correspond au moins à 2°.

10. Un capteur selon l'une quelconque des revendications précédentes, dans lequel la source lumineuse est continue.

11. Un procédé d'actionnement d'un capteur comprenant la direction de la lumière provenant d'une source lumineuse (12) sur un élément (11) ayant une fréquence de résonance dépendant de la nature d'une force appliquée, entraînant la vibration de l'élément, une partie de ladite lumière étant réfléchie par ledit élément, et l'agencement d'un moyen (16) destiné à déterminer la fréquence de résonance résultante, caractérisé en ce que ledit élément, dans un état non vibratoire, possède une surface plate, avec au moins trois verticales sur ladite surface plate parallèles, lesdites verticales se situant dans au moins deux plans différents, et en ce que ladite lumière est dirigée sur ladite surface plate du dit élément à un angle d'incidence non égal à zéro par rapport aux dites verticales sur ladite surface plate, de sorte que la quantité de lumière réfléchie par l'élément (11) dépend de son déplacement vibratoire à une fréquence de résonance.

12. Un procédé selon la revendication 11, dans lequel la source lumineuse (12) entraîne ledit élément (11) à vibrer à une fréquence de résonance par suite d'un effet photothermique dans lequel l'élément se dilate et se contracte alternativement en fonction d'une variation de la quantité de lumière reçue par ledit élément au cours de ladite vibration.

13. Un procédé selon les revendications 11 ou 12, dans lequel l'élément (11) est un pont suspendu au niveau de ses extrémités, vibrant dans la direction de sa résistance mécanique minimale.

14. Un procédé selon l'une quelconque des revendications 11 à 13, dans lequel la lumière est focalisée sur l'élément.

15. Un procédé selon l'une quelconque des revendications précédentes, dans lequel la lumière est dirigée sur l'élément (11) à un angle d'incidence d'au moins 2°.

16. Un procédé selon l'une quelconque des revendications précédentes, dans lequel la source lumineuse est continue.
